## Europäisches Patentamt
## European Patent Office
## Office européen des brevets

(19)

(11) Publication number: **0 018 048**
**B1**

(12) **EUROPEAN PATENT SPECIFICATION**

(45) Date of publication of patent specification: 30.03.83

(21) Application number: 80200343.4

(22) Date of filing: 17.04.80

(51) Int. Cl.³: **F 16 L 59/10,** F 16 L 59/02, B 29 C 27/16. B 29 C 27/24, B 29 C 27/28, B 29 D 23/00

(54) Plastics pipe part provided with an insulating layer and method of manufacturing same.

(30) Priority: 19.04.79 NL 7903080

(43) Date of publication of application:
29.10.80 Bulletin 80/22

(45) Publication of the grant of the patent:
30.03.83 Bulletin 83/13

(84) Designated Contracting States:
AT BE CH DE FR GB IT LI LU NL SE

(56) References cited:
CH - A - 151 014
DE - B - 1 099 291
GB - A - 1 081 926
LU - A - 73 382
US - A - 3 965 909

(73) Proprietor: WAVIN B.V.
251 Händellaan
NL-8031 EM Zwolle (NL)

(72) Inventor: van Nes, Jan Aert
12 Brinkberg
NL-7772 EZ Hardenberg (NL)
Inventor: van Dongeren, Jan Peter
6 Kerkweg
NL-7691 AL Bergentheim (NL)

(74) Representative: Van der Veken, Johannes Adriaan et al,
Willem Witsenplein 3 & 4
NL-2509 LP The Hague (NL)

Courier Press, Leamington Spa, England

## Plastics pipe part provided with an insulating layer and method of manufacturing same.

This invention relates to a plastics pipe part provided with an insulating layer, more particularly with a foam plastics insulating layer, the outer side of said layer being surrounded by a loose tubular sheath and a loose flexible tubular additional layer is present between the outer side of the insulating layer and the sheath.

Such a rigid plastics pipe part provided with a flexible insulating layer, said insulating layer being surrounded by a non perforated tubular additional layer of polyethylene and a tubular sheath of rigid material such as fibre reinforced thermosetting resin or another rigid material, being positioned around said additional layer is known from LU—A—7 3382.

In this composite pipe the insulating layer is present in a compressed state.

However at present for transporting heating water plastics pipe parts are employed consisting of strongly postcrystallizing plastics, which plastics are in a rubberlike condition after their extrusion so that they may easily get damaged and/or deformed by a compressed insulating layer. This holds particularly for polybutylene pipes, as said material is extraordinarily rubberlike after its extrusion and only gets its definite shape after a certain lapse of time, by postcrystallization. This rubberlike state is even more disadvantageous as during a postcrystallization period, of for example a fortnight, the pipe part may easily get damaged. Notwithstanding these disadvantages pipe parts of said type are preferred as after the postcrystallization period and obtaining their definite shape, they are still sufficiently flexible in order to give a pipe part any desired curvature during its instalment.

The present invention aims to provide a pipe part of the aforementioned type, avoiding any risk of damage to said pipe part of postcrystallizing plastics, during its postcrystallization.

This aim is attained according to the invention in that the pipe part is flexible and made of a heat resistant and strongly postcrystallizing plastics material, that the insulating layer covering the flexible pipe part is not compressed by the additional layer and the tubular sheath which is also flexible and that the additional layer is perforated and acts as a friction decreasing means between the insulating layer and the tubular sheath.

The use of a non compressed insulating layer allows the plastics pipe part to be provided with an insulating layer immediately after extrusion, so that it is necessary to delay this step of insulation until the tube has obtained its definite shape by postcrystallization.

Another advantageous effect of the present invention is that after postcrystallization, the plastics pipe part will be held in the insulating layer tensionless, so that the composite pipe as obtained may be reeled up for transport.

Furthermore by using said tubular additional layer the plastics pipe part being provided with the insulating layer, can be passed into the tubular sheath immediately after the extrusion and without deformation of the relative plastics pipe part so that said pipe part is well-protected during its postcrystallization.

The abovementioned advantages are especially of importance when hot water pipe lines have to be installed, as the number of couplings in such a circuit have to be kept as low as possible in order to restrict the risk of leakages. This involves that pipe parts having a length, ranging from approximately 100 to 200 meters have to be used to that end. Transporting such straight lengths of pipes causes many problems. Immediately reeling up such pipe parts consisting of a strongly postcrystallizing plastics is not possible as e.g. fourteen days later on it is very difficult to regive such pipe parts a straight shape while furthermore their cross-section will then be oval instead of round.

It should be noted that GB—A—1.081.926 discloses an additional tubular fabric layer used as a reinforcing layer around a pipe part of elastomeric material, which fabric layer is fixed by means of an adhesive to said flexible pipe part and to an outer flexible sheath of a fire hose jacket consisting of yarn material.

The additional layer is applied by stretching the fabric layer over a dispenser and passing the elastomeric pipe part through the dispenser so that this pipe part will draw the additional fabric layer from the dispenser and simultaneously this fabric layer is sprayed with an adhesive in order to connect the elastomeric pipe part with the hose jacket of yarn material.

In a very advantageous embodiment the additional layer consists of a knitted or woven tube of a thermoplastics as said tube may be clamped around the insulating layer.

Very advantageously, the material of the knitted tube consists of a polyamide, since the use of said material provides very excellent results.

When using the aforementioned tubular additional layer, a polybutylene pipe, not yet being fully set, and comprising a foam plastics insulating layer, surrounding said polybutylene pipe, may be passed into a flexible sheath, for instance consisting of polyethylene and particularly of high density polyethylene and particularly of high density polyethylene and the composite pipe may be subsequently reeled up after crystallization.

After having transported said reeled up composite pipe to the site of instalment, the composite pipe is pulled from the reel and installed in a normal manner, while each desired curvature may be formed.

The foam plastics insulating layer surrounding the plastics pipe part with strong postcrystallizing properties, more particularly a polybutylene pipe, is flexible and may consist for instance of a polyethylene foam strip which has for example been helically wound around said polybutylene pipe, although said polyethylene foam strip may also possibly be folded around the tube, the edges of the strip being heat sealed or adhered to each other, by means of an adhesive. It is also possible to use a polyethylene foam strip provided with a zipper, thus affording said strip to be applied as a tubular foam insulation around a polybutylene pipe.

The invention in another aspect relates to a method of manufacturing a plastics pipe part according to the invention, said method characterized in that the flexible pipe part is extruded, calibrated and cooled down, subsequently the pipe part is surrounded with the insulating layer, the pipe part surrounded by the insulating layer is subsequently guided through a tubular chamber carrying on its outer side the additional layer, which is drawn onto the insulating layer by the leading end of said pipe part, and the composite pipe comprising pipe part, insulating layer and additional layer is subsequently guided into the tubular sheath without comprising the insulating layer.

The extruded plastics pipe part, more particularly a polybutylene pipe, comprising an insulating layer surrounding same, is very conveniently passed through the internal space of an annular stock of a tubular additional layer, said pipe part with said insulating layer entraining said additional layer through the outer tubular sheath.

In view of the entraining of the additional layer, one end of said additional layer should preferably be closed off, for instance by knotting.

The knotted end of said additional layer may then simultaneously serve as a seizing point for drawing means, which draw the relative pipe part with the foam plastics insulating layer surrounding same, through the tubular sheath and overcomes the frictional forces during this operation.

The present invention will be illustrated with respect to an embodiment in the drawing, wherein:

Figure 1 is a perspective view of a pipe part in accordance with the invention;

Figure 2 is a cross section through a pipe part according to the invention;

Figure 3 is an installation for manufacturing a pipe part in accordance with the invention.

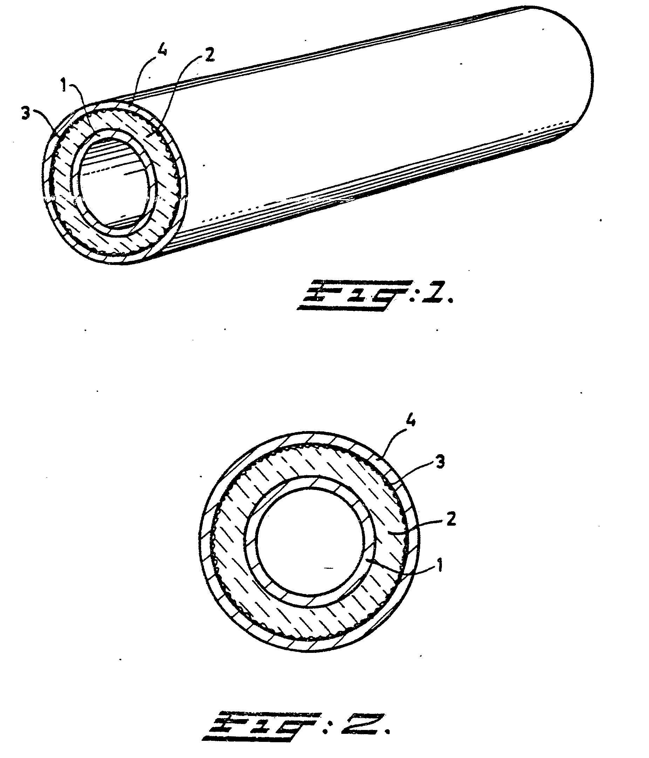

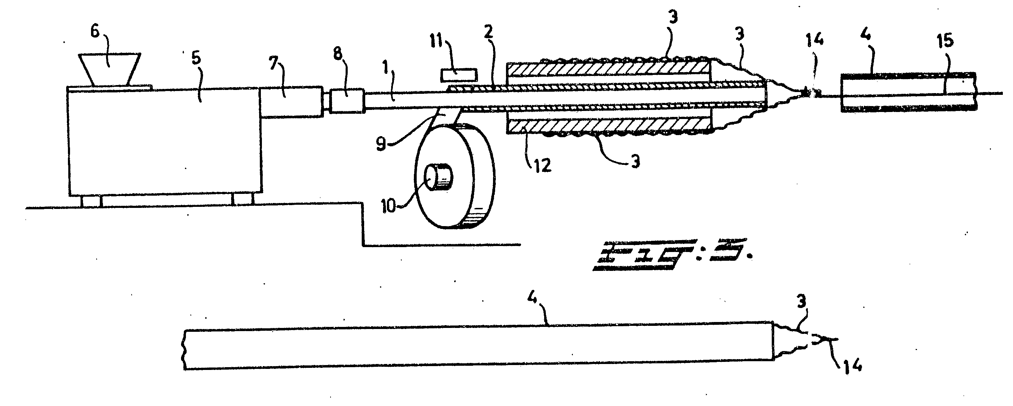

Fig. 1 shows a pipe part 1, consisting of polybutylene, which thermoplastics may be extruded in a manner known per se and may then be employed for transporting hot fluids. Polybutylene is a strongly postcrystallizing plastics.

The polybutylene pipe 1 is surrounded by a foam plastics insulating layer 2 consisting of a foam tape or strip 9 of polyethylene which has, for example, been helically wound around the polybutylene pipe 1.

Surrounding said polybutylene pipe 1 by a tape or strip of foamed polyethylene, may obviously also be obtained by connecting the edges of said polyethylene foam tape or strip with each other.

Upon the outer side of the foam plastics insulating layer 2, a knitted nylon stocking 3 is disposed, the composite pipe then being surrounded by a tubular sheath 4, consisting of a high density polyethylene tube. It will be obvious that instead of polyethylene other plastics may be used for said tubular sheath 4, provided that said tubular sheath, the foam plastics insulating layer 2, and the pipe part 1 are flexible, so that the completed composite pipe may be given any desired curvature or bend on installing the same.

As after extrusion by an extruder polybutylene pipes have a rather instable structure, due to the rubberlike condition of polybutylene, it is recommended to manufacture the abovementioned pipe in a special manner, which proceeds as follows.

In an extruder 5 being fed through an inlet 6, polybutylene is plasticized and extruded as a polybutylene pipe 1, through an extrusion nozzle 7 of the extruder 5. This polybutylene pipe is then guided through a calibrating device 8, a cooling space and a drawing device in order to give the pipe a desired round shape and its desired dimensions.

The polybutylene pipe 1 obtained after calibration still has a rubberlike structure and has to convert into its definite shape by postcrystallization. This means that said polybutylene pipe 1 may be easily damaged or deformed at that moment.

Subsequently the polybutylene pipe 1 is surrounded by a band or strip 9 of polyethylene foam from a storage reel 10, a welding device 11 interconnecting the adjoining edges of the band or strip 9 of polyethylene foam by heatsealing.

The pipe part, being surrounded by the foam plastics layer 2, still has an instable structure and is subsequently guided through a tubular chamber 12 having at the outer side a knitted nylon stocking 3.

The end 14 of the knitted stocking 3 consisting of nylon filaments is closed off by knotting, subsequently the supplied polybutylene pipe 1 already comprising the foam plastics insulating layer 2, draws the upset knitted nylon stocking 3 from the outer side of chamber 12, said stocking then being tightly drawn onto the insulating layer 2, thus causing said insulating layer to be easily guided into a tubular sheath 4.

The entire composite pipe consisting of the polybutylene pipe 1 the foam plastics insulating layer 2 surrounding the former, and the knitted nylon stocking 2 surrounding the foam plastics insulating layer 2, is subsequently guided into a tubular sheath 4 consisting of polyethylene and more particularly of high density polyethylene.

After filling of said polyethylene tube 4, for example over a length of approximately 200 m, with the composite pipe of polybutylene 1, the foam plastics insulating layer 2, and the nylon stocking 3, the knotted end 14 of the nylon stocking 3 is cut off, and the pipe so obtained is stored in order to let the polybutylene material postcrystallize in a normal manner and obtain its definite shape for its final instalment. Subsequently the composite pipe is reeled up.

The use of the knitted nylon stocking 3 presents the additional important advantage that damaged parts of the foam plastics insulating layer 2, if any, are well enclosed, so that no problems will occur when the polybutylene pipe 1 with the foam plastics insulating layer 2 is passed into the tubular sheath 4. If said nylon stocking 3 is not used, parts of the foam plastics insulating layer, which have not been optimally welded to one another, may be easily damaged by the front edge of the tubular sheath 4.

It will be obvious that, due to the presence of the knotted end 14 of the nylon stocking 3, a tensile stress may be exerted upon the composite pipe, by means of a drawing member 15, thus allowing the composite pipe to be easily drawn through the tubular sheath, and to maintain very high production speeds. Exerting a tensile stress may also easily overcome frictional forces between the polybutylene pipe provided with the plastics foam layer and the inner side of the tubular sheath.

After crystallization the polybutylene tube 1 will be accommodated tensionless in the insulating layer forming part of the composite pipe part.

It should be noted that the insulating layer is not compressed in a ready pipe part in accordance with the invention. Should, as a matter of fact, the insulating layer with the polybutylene pipe be reeled up immediately after moulding, then said polybutylene pipe will not postcrystallize in a straight shape, thus causing the insulating layer to be locally compressed at the time when the polybutylene pipe is straightened to its final straight shape.

## Claims

1. A plastics pipe part (1) provided with a loose flexible insulating layer (2), more particularly with a foam plastics insulating layer, the outer side of said insulating layer (2) being surrounded by a loose tubular sheath (4) and a loose flexible tubular additional layer (3) is present between the outer side of the insulating layer (2) and the sheath (4), characterized in that the pipe part (1) is flexible and made of a heat resistant and strongly post-crystallizing plastics material that the insulating layer (2) covering the flexible pipe part (1) is not compressed by the additional layer (3) and the tubular sheath (4) which is also flexible and that the additional layer (3) is perforated and acts as a friction decreasing means between the insulating layer (2) and the tubular sheath.

2. A plastics pipe according to claim 1, characterized in that the additional layer (3) consists of a knitted or woven perforated tube of a thermoplastics, particularly a polyamide.

3. A plastics pipe according to claim 1 or 2, characterized in that the additional layer (3) projects outside the pipe part (1) and the tubular sheath (4) and is provided with an open or closed end.

4. A plastics pipe part according to any or more of the preceding claims, characterized in that the tubular sheath (4) consists of polyethylene and the pipe part (1) of polybutylene.

5. A method of manufacturing a plastics pipe part, according to any or more of the preceding claims characterized in that the flexible part (1) is extruded, calibrated and cooled down, subsequently the pipe part (1) is surrounded with the insulating layer (2), the pipe part surrounded by the insulating layer (2) is subsequently guided through a tubular chamber (12) carrying on its outer side the additional layer (3), which is drawn onto the insulating layer (2) by the leading end of said pipe part (1), and the composite pipe comprising pipe part (1), insulating layer (2) and additional layer (3) is subsequently guided into the tubular sheath (4) without compressing the insulating layer.

6. A method according to claim 5, characterized in that a tensile stress is exerted upon the additional layer (3) during the passing of the pipe part (1) with the insulating layer (2) and the additional layer surrounding same through the tubular sheath (4).

## Revendications

1. Elément de tuyau en matière plastique (1) pourvu d'une couche isolante molle et flexible (2) et, plus particulièrement d'une couche isolante en mousse de matière plastique, la face extérieure de ladite couche isolante (2) étant enveloppée d'une gaine tubulaire molle (4) avec interposition entre cette dernière et la face extérieure de la couche isolante (2) d'une couche additionnelle tubulaire (3) en une matière molle et flexible, caractérisé en ce que l'élément de tuyau (1) est flexible et est fait d'une matière plastique résistante à la chaleur et à fort pouvoir de post-cristallisation, en ce que la couche isolante (2) recouvrant l'élément de tuyau flexible (1) n'est pas comprimée ni par la couche additionnelle (3) ni par la gaine tubulaire (4) qui est également flexible et en ce que la couche additionnelle (3) est perforée et agit comme un moyen de réduction des frottements entre la couche isolante (2) et la gaine tubulaire.

2. Elément de tuyau en matière plastique selon la revendication 1, caractérisé en ce que la couche additionnelle (3) consiste en un tube perforé tricoté ou tissé et constitué d'une matière thermoplastique, en particulier d'un polyamide.

3. Elément de tuyau en matière plastique selon la revendication 1 ou 2, caractérisé en ce que la couche additionnelle (3) fait saillie à l'extérieur de l'élément de tuyau (1) et de la gaine tubulaire (4) et est pourvu d'une extrémité ouverte ou fermée.

4. Elément de tuyau en matière plastique selon une ou plusieurs des revendications précédentes, caractérisé en ce que la gaine tubulaire (4) est faite de polyéthylène et l'élément de tuyau (1) de polybutylène.

5. Procédé de fabrication d'un élément de tuyau en matière plastique tel que défini par une ou plusieurs des revendications précédentes, caractérisé en ce que l'élément flexible (1) est extrudé, calibré et refroidi, l'élément de tuyau (1) est ensuite enveloppé avec la couche isolante (2), puis l'élément de tuyau enveloppé par la couche isolante (2) est dirigé à travers une chambre tubulaire (12) portant sur sa face extérieure la couche additionnelle (3) qui est tirée sur la couche isolante (2) par l'extrémité frontale dudit élément de tuyau (1), le tuyau composite qui comprend l'élément de tuyau (1), la couche isolante (2) et la couche additionnelle (3), étant ensuite guidé à l'intérieur de la gaine tubulaire (4) sans qu'il y ait compression de la couche isolante.

6. Procédé selon la revendication 5, caractérisé en ce qu'une force de traction est exercée sur la couche additionnelle (3) au cours du passage, à travers la gaine tubulaire (4), de l'élément de tuyau (1) pourvu de la couche isolante (2) elle-même enveloppée par la couche additionnelle.

## Patentansprüche

1. Kunststoffrohrteil (1) mit einer unverbundenen flexiblen Isolierlage (2), insbesondere einer Schaumkunststoff-Isolierlage, deren Außenseite von einer unverbundenen schlauchförmigen Hülle (4) umgeben ist und wobei eine unverbundene schlauchförmige zusätzliche Lage (3) zwischen der Außenseite der Isolierlage (2) und der Hülle (4) angeordnet ist, dadurch gekennzeichnet, daß das Rohrteil (1) flexibel und von einem wärmebeständigen und stark nachkristallisierenden Kunststoff gebildet ist, daß die das flexible Rohrteil (1) bedeckende Isolierlage (2) von der zusätzlichen Lage (3) und der ebenfalls flexiblen schlauchförmigen Hülle (4) nicht komprimiert ist und daß die zusätzliche Lage (3) perforiert ist und als Reibungsverminderungsmittel zwischen der Isolierlage (2) und der schlauchförmigen Hülle wirkt.

2. Kunststoffrohrteil nach Anspruch 1, dadurch gekennzeichnet, daß die zusätzliche Lage (3) aus einem gestrickten oder gewebten perforierten Schlauch aus einem thermoplastischen Kunststoff, insbesondere einem Polyamid, besteht.

3. Kunststoffrohrteil nach Anspruch 1 oder 2, dadurch gekennzeichnet, daß die zusätzliche Lage (3) nach außen über das Rohrteil (1) und die schlauchförmige Hülle (4) vorsteht und mit einem offenen oder geschlossenen Ende versehen ist.

4. Kunststoffrohrteil nach einem oder mehreren der vorstehenden Ansprüche, dadurch gekennzeichnet, daß die schlauchförmige Hülle (4) aus Polyäthylen und das Rohrteil (1) aus Polybutylen besteht.

5. Verfahren zum Herstellen eines Kunststoffrohrteils nach einem oder mehreren der vorstehenden Ansprüche, dadurch gekennzeichnet, daß das flexible Rohrteil (1) extrudiert, kalibriert und abgekühlt, sodann das Rohrteil (1) mit der Isolierlage (2) umgeben, das von der Isolierlage (2) umgebene Rohrteil anschließend durch eine rohrförmige Kammer (12) geführt, die auf ihrer Außenseite die zusätzliche Lage (3) trägt, die auf die Isolierlage (2) durch das vorauslaufende Ende des Rohrteils (1) gezogen wird, und das aus dem Rohrteil (1), der Isolierlage (2) und der zusätzlichen Lage (3) zusammengesetzte Rohr sodann in die schlauchförmige Hülle (4), ohne die Isolierlage zu komprimieren, hineingeführt wird.

6. Verfahren nach Anspruch 5, dadurch gekennzeichnet, daß eine Zugspannung auf die zusätzliche Lage (3) während des Durchgangs des Rohrteils (1) mit der Isolierlage (2) und der diese umgebenden zusätzlichen Lage durch die schlauchförmige Hülle (4) ausgeübt wird.

0018048

FIG:1.

FIG:2.

1

Fig. 3.

0018048